# EUROPÄISCHE PATENTANMELDUNG

(11) **EP 3 786 614 A1**
(43) Veröffentlichungstag der Anmeldung: **03.03.2021**
(21) Anmeldenummer: 19194286.1
(22) Anmeldetag: 29.08.2019
(51) Int. Cl.: G01N 15/06

(54) **VERFAHREN ZUR BEREITSTELLUNG EINES LUFTSTROMS**

(71) Anmelder: Carl Freudenberg KG, 69469 Weinheim (DE)
(72) Erfinder: Caesar, Thomas, Dr., 69469 Weinheim (DE); Schulz, Karsten, 74924 Neckarbischofsheim (DE); Tapper, Renate, 64625 Bensheim (DE); Schroth, Thomas, 67240 Bobenheim-Roxheim (DE); Sell-Poelloth, Sandra, 67487 Maikammer (DE); Weber, Patrick, 69469 Weinheim (DE)

(57) **Zusammenfassung**

Die Erfindung betrifft ein Verfahren zur Bereitstellung eines Luftstroms für ein System (10), insbesondere eine Anlage (1, 2), mit folgenden Schritten:
- Vorgabe eines Luftbedarfs und eines erforderlichen Luftreinheitsgrades des Systems (10), insbesondere der Anlage, und Hinterlegung der Werte in einer Speichereinheit (4) eines Steuermoduls (3).
- Reinigung eines Luftstroms (L) in einem Filtermodul (6), aufweisend Filterelemente (7).
- Bereitstellen des Luftstroms (L) durch das Filtermodul (6) an Lufteinlässen (8) oder Luftauslässen (9) des Systems, insbesondere der Anlage.
- Erfassung der Größe des bereitgestellten Luftstroms (L) und des tatsächlichen Luftreinheitsgrades durch Sensorik (5).
- Vergleich der Größe des bereitgestellten Luftstroms (L) und des tatsächlichen Luftreinheitsgrades mit den hinterlegten Werten.

Erfindungsgemäß wurde als vorteilhaft erkannt in einem letzten Schritt eine Leistungskennzahl eines Filtermoduls zu berechnen.

Durch das Verfahren ist sichergestellt, dass ein erforderlicher Luftbedarf bereitgestellt und die Leistung der Luftstrombereitstellung quantifiziert wird.

## Beschreibung

Die Erfindung betrifft ein Verfahren zur Bereitstellung eines Luftstroms gemäß Anspruch 1.

### Stand der Technik

Aus dem Stand der Technik ist es bekannt, dass unterschiedlichste Systeme, in welchen Prozesse ablaufen, einen bestimmten Luftbedarf haben. So können beispielsweise Anlagen zur Energieerzeugung einen gewissen Bedarf an Prozesszuluft haben. Dieser Bedarf umfasst dabei üblicher Weise eine bestimmte Luftmenge als auch eine bestimmte Luftqualität. Aus diesem Grund kommen Filtermodule mit Filterelementen zum Einsatz. Die Filterelemente können beispielsweise als Oberflächenfilter, Hochtemperaturfilter oder Taschenfilter ausgeführt sein. Ein Filtermodul umfasst dabei häufig mehrere Filterstufen, d.h. Filterelemente, welche in Reihe angeordnet sind.

### Aufgabenstellung

Aufgabe der vorliegenden Erfindung ist es, ein Verfahren zur Bereitstellung eines Luftstroms zu beschreiben. Dabei soll sichergestellt sein, dass ein erforderlicher Luftbedarf bereitgestellt und die Leistung der Luftstrombereitstellung quantifiziert wird.

### Technische Lösung

Gelöst wird diese Aufgabe durch ein Verfahren zur Bereitstellung eines Luftstroms mit den Merkmalen von Anspruch 1.

Erfindungsgemäß wurde als vorteilhaft erkannt eine Leistungskennzahl eines Filtermoduls zu berechnen:
Das erfindungsgemäße Verfahren dient der Bereitstellung eines Luftstroms als Prozesszuluft oder als Prozessabluft für ein System, in welchem ein Prozess abläuft. Bei dem System handelt es sich insbesondere um eine Anlage.

In einem ersten Schritt erfolgt eine Vorgabe eines Luftbedarfs und eines erforderlichen Luftreinheitsgrades des Systems. Der Luftbedarf kann den Volumenstrom, die Luftmenge und die Strömungsgeschwindigkeit umfassen. Der erforderliche Luftreinheitsgrad kann beispielsweise als PM₁₀, PM_{2,5} oder PM₁ angegeben werden.

Es erfolgt die Hinterlegung dieser Werte in einer Speichereinheit eines Steuermoduls. In anderen Worten: es werden Soll-Werte für Luftbedarf und Luftreinheitsgrad festgelegt.

In einem zweiten Schritt erfolgt eine Reinigung eines Luftstroms in einem Filtermodul. Die Reinigung des Luftstroms im Filtermodul kann durch eine Filtration von Partikeln und/oder eine Adsorption von Schadgasen erfolgen. Bei dem Luftstrom kann es sich um Frischluft, Abluft oder Mischluft handeln. Das Filtermodul, welches Teil des Systems ist, besitzt eines oder mehrere Filterelemente, mit welchen Schadstoffe wie z.B. Partikel oder Schadgase aus dem Luftstrom entfernt werden können. Dieser gereinigte Luftstrom wird sodann durch das Filtermodul - im Falle einer Prozesszuluft - an Lufteinlässen oder - im Falle einer Prozessabluft - an Luftauslässen des Systems bereitgestellt.

In einem weiteren Schritt erfolgt eine Erfassung der Größe des bereitgestellten Luftstroms und des bereitgestellten tatsächlichen Luftreinheitsgrades durch Sensorik. Dazu können Sensoren vorgesehen sein, welche beispielsweise den Volumenstrom, die Luftmenge oder die Strömungsgeschwindigkeit erfassen, um so den bereitgestellten Luftstrom zu bestimmen. Auch für die Bestimmung des Luftreinheitsgrades können Sensoren vorgesehen sein. Sodann erfolgt in einem weiteren Schritt ein Vergleich der Größe des bereitgestellten Luftstroms und des tatsächlichen Luftreinheitsgrades mit den hinterlegten Werten, also ein Vergleich von Ist-Werten mit Soll-Werten.

Unter einem Sensor wird in dieser Anmeldung die Messeinheit zur Bestimmung einer Messgröße verstanden. So können z.B. in einer Luftmesseinheit mit 3 Sensoren auch 3 unterschiedliche Messgrößen erfasst und beispielsweise die Schadstoffkonzentration von 3 unterschiedlichen Schadstoffen abgeleitet werden. Der Sensor umfasst nach diesem Verständnis nicht nur die Einheit, in welcher ein physikalischer oder chemischer Effekt erfasst wird (Aufnehmer), sondern umfasst auch die Aufbereitungseinheit, welchen diesen gemessenen Effekt in ein weiterverarbeitbares elektrisches Signal wandelt.

Die Erfassung der Größe des bereitgestellten Luftstroms und des bereitgestellten tatsächlichen Luftreinheitsgrades kann entweder unmittelbar oder mittelbar erfolgen. Bei unmittelbarer Erfassung wird die relevante Größe durch Messung direkt erfasst. Bei mittelbarer Erfassung wird die relevante Größe basierend auf einem Messwert berechnet oder abgeleitet. Eine indirekte, mittelbare Erfassung des Luftstroms kann z.B. erfolgen indem durch Sensorik die Druckdifferenz am Filter und eine Ventilatordrehzahl gemessen werden und unter Berücksichtigung von Ventilatorkenndaten der Luftstrom berechnet wird.

Schließlich erfolgt die Berechnung einer Leistungskennzahl des Filtermoduls. Dazu werden Leistungswerte des Filtermoduls über einen bestimmten Zeitraum, z.B. über einen oder mehrere Tage, über einen Monat oder über ein Jahr kumuliert. Dies dient der Bestimmung der über den bestimmten Zeitraum geleisteten Luftstromreinigung, wobei eine zeitbezogene Leistung des Filtermoduls insbesondere nur dann für die Berechnung berücksichtigt wird, wenn bezogen auf den bestimmten, betrachteten Zeitraum die Ist-Werte mindestens die Soll-Werte erfüllen. In anderen Worten: Die Leistung zur Reinigung des Luftstroms durch das Filtermodul wird nur dann berücksichtigt, wenn die Vorgaben bezüglich Luftbedarf und Luftreinheitsgrad erfüllt werden.

In vorteilhafter Weiterbildung des erfindungsgemäßen Verfahrens fließt in die Leistungskennzahl gemäß dem letzten Schritt des vorstehend beschriebenen Verfahrens das Volumen der bereitgestellten Luft ein.

In einer besonders vorteilhaften und daher bevorzugten Weiterbildung des erfindungsgemäßen Verfahrens erfolgt in einem zusätzlichen Schritt eine Bestimmung der gefilterten Schadstoffmenge in dem Filtermodul unter Verwendung von Sensorik, z.B. unter Bestimmung der Masse, des Volumens oder eine Partikelanzahl an gefilterten Schadstoffen. Zur Bestimmung der Masse der gefilterten Schadstoffmenge kann beispielsweise eine in das Filtermodul integriert oder auch eine externe Waage Verwendung finden.

Gemäß einer ersten Weiterbildung wird durch die Sensorik die Schadstoffkonzentration in der Zuluft und in der Abluft des Filtermoduls erfasst. Damit kann die Beladung der Filterelemente mit Schadstoffen durch Berechnung bestimmt werden, wie zum Beispiel in der DE 1 035 3897 B4 beschrieben. In einer alternativen oder auch ergänzenden Weiterbildung wird durch die Sensorik der Druckverlust über die Filterelemente des Filtermoduls erfasst. Auch damit kann die Beladung der Filterelemente mit Schadstoffen durch Berechnung bestimmt werden, wie z.B. in der EP 1 467 071 A1 beschrieben. Die auf diese Weise bestimmte gefilterte Schadstoffmenge kann insbesondere in die Leistungskennzahl des Filtermoduls mit einfließen.

In einer vorteilhaften und daher besonders bevorzugten Weiterbildung des erfindungsgemäßen Verfahrens erfolgt in einem weiteren, nachfolgenden Schritt eine Zuordnung einer Kostengröße zur Leistungskennzahl und damit die Bestimmung eines Preises für die im Filtermodul geleistete Luftstromreinigung. Die Kostengröße kann dem Betreiber und/oder Bediener des Systems bereitgestellt, z.B. angezeigt werden.

In einer möglichen Weiterbildung des Verfahrens erfolgt basierend auf dem Vergleich der Ist-Werte mit den Soll-Werten durch das Steuermodul eine Regelung der Filterelemente des Filtermoduls und damit von deren Reinigungsleistung sowie eine Regelung des Luftstroms.

Das System kann ausgeführt sein als Gebäude, z.B. als Krankenhaus mit einem bestimmten Bedarf an sauberer Frischluft. Alternativ kann das System als Anlage ausgebildet sein, insbesondere als Energieerzeugungsanlage, als Turbomaschine (z.B. als Gasmotor oder Verdichter) oder als Produktionsanlage. Die Produktionsanlage kann z.B. zur Herstellung von Nahrungsmitteln oder Getränken dienen, in der Oberflächentechnik zum Einsatz gelangen, insbesondere als Lackieranlage, oder der Produktion von pharmazeutischen Produkten dienen.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: ein erstes System, bei welchem ein Luftstrom an einem Lufteinlass bereitgestellt wird
- Fig. 2: ein zweites System, bei welchem ein Luftstrom an einem Luftauslass bereitgestellt wird
- Fig. 3: den Ablauf des Verfahrens

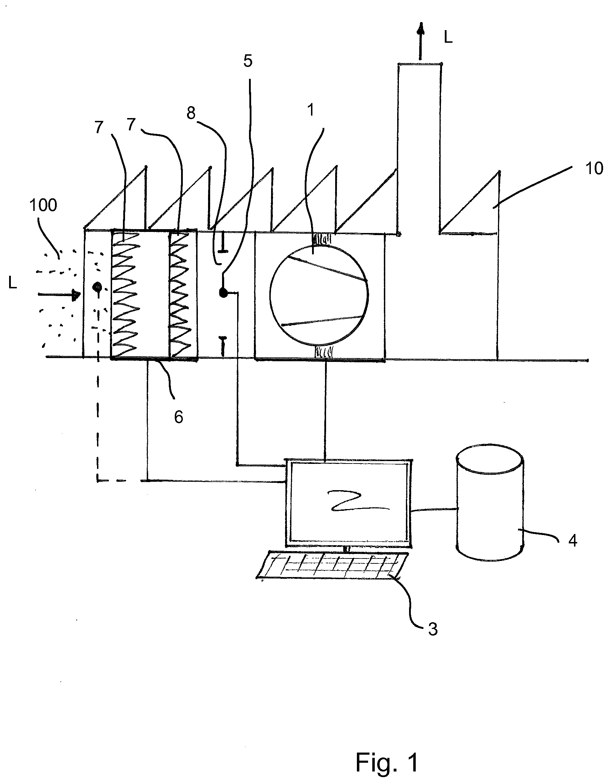

Fig. 1 zeigt ein System 10, welches als Energieerzeugungsanlage 1 ausgeführt ist. Dem System 10 wird ein Luftstrom L als Prozesszuluft zugeführt. Der Luftstrom L ist verunreinigt und beinhaltet Schadstoffe 100. Diese Schadstoffe 100 können von einem Filtermodul 6 mit mehreren Filterelementen 7 entfernt werden, sodass der Energieerzeugungsanlage 1 ein gereinigter Luftstrom L zur Verfügung gestellt wird. Dieser Luftstrom L wird an einem Lufteinlass 8 bereitgestellt. Zum sicheren und zuverlässigen Betrieb der Energieerzeugungsanlage 1 wird ein bestimmter Luftbedarf und ein bestimmter Luftreinheitsgrad benötigt. Sollwerte bezüglich des Luftbedarfs und des erforderlichen Luftreinheitsgrades können in einer Speichereinheit 4 hinterlegt werden. Durch Sensorik 5, welche mindestens einen Sensor umfasst, kann die Größe des bereitgestellten Luftstroms L und der tatsächliche Luftreinheitsgrad erfasst werden. Von einem Steuermodul 3 können die Ist-Werte mit den Soll-Werten verglichen werden und kann eine Leistungskennzahl des Filtermoduls 6 berechnet und bereitgestellt werden. Zusätzlich könnte durch das Steuermodul 3 auch eine Regelung des Filtermoduls 6 und des Luftstroms erfolgen. In dem in Fig. 1 dargestellten Ausführungsbeispiel umfasst die Sensorik 5 Sensoren, welche im Bereich des Lufteinlasses 8 angeordnet sind. Die Sensoren dienen dazu, den bereitgestellten Luftstrom L und den tatsächlichen Luftreinheitsgrad zu erfassen. Wie durch gestrichelte Linien angedeutet kann ein weiterer Sensor vorgesehen sein, welcher stromaufwärtig des Filtermoduls 6 angeordnet ist. Durch diesen Sensor kann beispielsweise die Schadstoffkonzentration in der Zuluft erfasst werden.

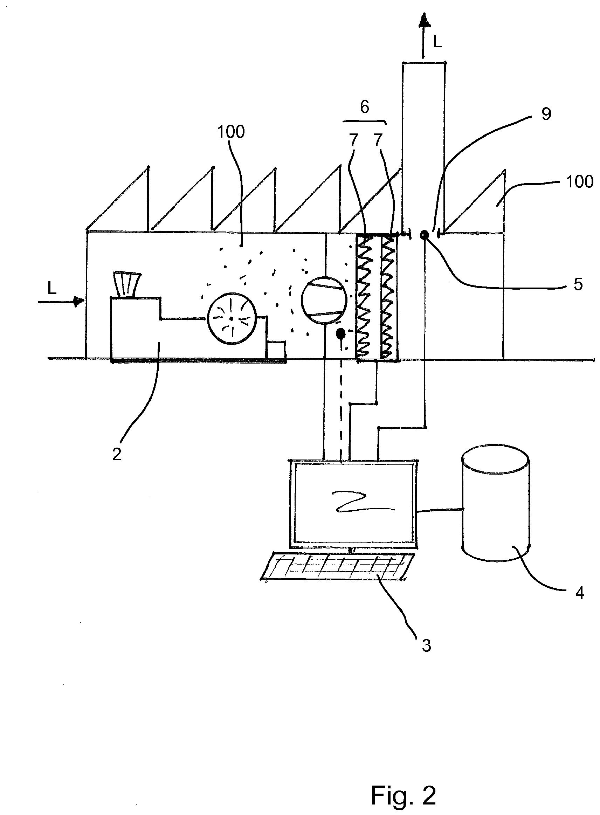

In Fig. 2 ist ein ähnliches System 100 dargestellt. Von einer Produktionsanlage 2 wird dabei verunreinigte Prozessabluft generiert. Durch eine nicht näher dargestellte Absaugung kann die Prozessabluft mit Luftverunreinigung 100 durch ein Filtermodul 6 mit mehreren Filterelementen 7 geleitet und dabei gereinigt werden. Bezüglich eines Luftbedarfs an Prozessabluft, dass heißt, eines bestimmten Luftaustausches, bestehen Erfordernisse, welche durch die Produktionsanlage 2 bestimmt sind. Bezüglich eines Luftreinheitsgrades der Prozessabluft bestehen in der Regel gesetzliche Vorgaben zur Luftreinhaltung. Der Einhaltung dieser Vorgaben kann durch das dargestellte System 10 sichergestellt werden und durch das Steuermodul 3 kann die Berechnung und Bereitstellung einer Leistungskennzahl des Filtermoduls 6 erfolgen. Auch können gegebenenfalls das Absaugmodul und das Filtermodul 6 von dem Steuermodul 3 geregelt werden.

Das System könnte auch als Produktionsanlage ausgeführt sein, bei welcher ein gewisser Bedarf an sauberer Luft besteht, z.B. von Prozesszuluft in der pharmazeutischen Produktion. Das System könnte auch als Gebäude ausgeführt sein, bei welchem ein gewisser Bedarf an sauberer Luft besteht, z.B. als Krankenhaus mit Operationssälen.

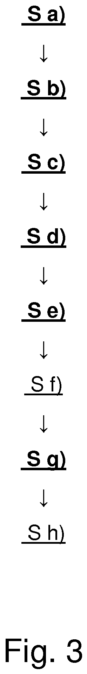

In Fig. 3 ist der Ablauf des Verfahrens angedeutet, wobei die jeweiligen Verfahrensschritte mit S bezeichnet werden. Obligatorische Schritte sind fett dargestellt, fakultative Schritte sind dünn dargestellt.
1. Verfahren zur Bereitstellung eines Luftstroms für ein System 10, insbesondere eine Anlage 1, 2, mit folgenden Schritten:
   S a) Vorgabe eines Luftbedarfs und eines erforderlichen Luftreinheitsgrades des Systems 10, insbesondere der Anlage, und Hinterlegung der Werte in einer Speichereinheit 4 eines Steuermoduls 3.
   S b) Reinigung eines Luftstroms L in einem Filtermodul 6, aufweisend Filterelemente 7.
   S c) Bereitstellen des Luftstroms L durch das Filtermodul 6 an Lufteinlässen 8 oder Luftauslässen 9 des Systems, insbesondere der Anlage.
   S d) Erfassung der Größe des bereitgestellten Luftstroms L und des tatsächlichen Luftreinheitsgrades durch Sensorik 5.
   S e) Vergleich der Größe des bereitgestellten Luftstroms L und des tatsächlichen Luftreinheitsgrades mit den hinterlegten Werten.
   S f) fakultativ: Bestimmung der gefilterten Schadstoffmenge 100 in dem Filtermodul 6 unter Verwendung von Sensorik 5.
   S g) Berechnung einer Leistungskennzahl des Filtermoduls 6.
   S h) fakultativ: Zuordnung einer Kostengröße zur Leistungskennzahl.

### Bezugszeichenliste

- 1: Energieerzeugungsanlage
- 2: Produktionsanlage
- 3: Steuermodul
- 4: Speichereinheit
- 5: Sensorik
- 6: Filtermodul
- 7: Filterelement
- 8: Lufteinlass
- 9: Luftauslass
- 10: System (z.B. Anlage)

- 100: Luftverunreinigung (Schadstoffe)

- L: Luftstrom

## Patentansprüche

1. Verfahren zur Bereitstellung eines Luftstroms für ein System (10), insbesondere eine Anlage (1, 2), mit folgenden Schritten:
a. Vorgabe eines Luftbedarfs und eines erforderlichen Luftreinheitsgrades des Systems (10), insbesondere der Anlage, und Hinterlegung der Werte in einer Speichereinheit (4) eines Steuermoduls (3).
b. Reinigung eines Luftstroms (L) in einem Filtermodul (6), aufweisend Filterelemente (7).
c. Bereitstellen des Luftstroms (L) durch das Filtermodul (6) an Lufteinlässen (8) oder Luftauslässen (9) des Systems.
d. Erfassung der Größe des bereitgestellten Luftstroms (L) und des tatsächlichen Luftreinheitsgrades durch Sensorik (5).
e. Vergleich der Größe des bereitgestellten Luftstroms (L) und des tatsächlichen Luftreinheitsgrades mit den hinterlegten Werten.
g. Berechnung einer Leistungskennzahl des Filtermoduls (6).

2. Verfahren zur Bereitstellung eines Luftstroms (L) für ein System (10) nach Anspruch 1
wobei in die Leistungskennzahl das Volumen der bereitgestellten Luft einfließt.

3. Verfahren zur Bereitstellung eines Luftstroms für ein System nach einem der vorangehenden Ansprüche mit dem zusätzlichen Schritt
f. Bestimmung der in dem Filtermodul (6) gefilterten Schadstoffmenge (100) unter Verwendung von Sensorik (5).

4. Verfahren zur Bereitstellung eines Luftstroms für ein System nach Anspruch 3,
wobei die Sensorik (5) die Schadstoffkonzentration (100) in der Zuluft und in der Abluft des Filtermoduls (6) erfasst.

5. Verfahren zur Bereitstellung eines Luftstroms für ein System nach Anspruch 3,
wobei die Sensorik (5) den Druckverlust über die Filterelemente (7) des Filtermoduls (6) erfasst.

6. Verfahren zur Bereitstellung eines Luftstroms für ein System nach Anspruch 3 und/oder 4 und/oder 5
wobei in die Leistungskennzahl die gefilterte Schadstoffmenge einfließt.

7. Verfahren zur Bereitstellung eines Luftstroms für ein System nach einem der vorangehenden Ansprüche mit dem zusätzlichen Schritt
h. Zuordnung einer Kostengröße zur Leistungskennzahl.

8. Verfahren zur Bereitstellung eines Luftstroms für ein System nach einem der vorangehenden Ansprüche
wobei in Schritt b im Filtermodul (6) eine Filtration von Partikeln und/oder eine Adsorption von Schadgasen erfolgt.

9. Verfahren zur Bereitstellung eines Luftstroms für ein System nach einem der vorangehenden Ansprüche
wobei in Schritt e) durch das Steuermodul (3) eine Regelung des Filtermoduls (6) und des Luftstroms (L) erfolgt.

10. Verfahren zur Bereitstellung eines Luftstroms für ein System nach einem der vorangehenden Ansprüche,
wobei das System (10) ausgeführt ist als Gebäude oder als Anlage, insbesondere als Energieerzeugungsanlage (1), als Turbomaschine oder als Produktionsanlage (2).
